# EUROPEAN PATENT SPECIFICATION

(11) **EP 2 387 237 B1**
(45) Date of publication and mention of the grant of the patent: **13.08.2014**
(21) Application number: 11161965.6
(22) Date of filing: 11.04.2011
(51) Int. Cl.: H04N 5/76, H04N 5/92, H04N 21/433, H04N 21/4402, H04N 21/4147

(54) **Recorder, recording method and video display apparatus**
Recorder, Aufzeichnungsverfahren und Videoanzeigevorrichtung
Enregistreur, procédé d'enregistrement et appareil d'affichage vidéo

(30) Priority: 12.05.2010 JP 2010110510
(43) Date of publication of application: 16.11.2011
(73) Proprietor: Kabushiki Kaisha Toshiba, Tokyo 105-8001 (JP)
(72) Inventor: Togashi, Yuuichi, Tokyo 105-8001 (JP)
(74) Representative: Henkel, Breuer & Partner

(56) References cited:
- US-A1- 2002 106 185
- US-A1- 2005 025 467
- US-A1- 2008 159 709

## Description

### FIELD

Embodiments described herein relate generally to a recorder which receives and records plural broadcast programs simultaneously, and to a recording method thereof and a video display apparatus.

### BACKGROUND

Video display apparatus having a function of receiving plural broadcast programs simultaneously and recording received plural broadcast programs continuously in a storage device such as an HDD have been put into practical use (full recording function).

However, because of a limited capacity of the storage device, even in the full recording function, it is necessary to, for example, record new programs while erasing old recorded video data.

Even programs that were recorded by the full recording function and the user wants to be kept recorded in the storage device are erased when a prescribed time has elapsed.

JP 2007251280 A discloses a program recording device, a mobile terminal and a program recording management system. The automatic program recording device (program recording device) temporally records all programs of all channels to ordinary recording areas. The mobile phone terminal of the user includes a reception and recording function of television programs. When the user uses the mobile phone terminal to view or record a desired television program while on the road and goes back home, the mobile phone terminal transmits program particularizing information (program title data) for particularizing a program viewed or recorded while on the road to the automatic program recording device in the home. The automatic program recording device receiving the program particularizing information moves the program corresponding to the program particularizing information from the ordinary recording areas to storage data areas, wherein the program is stored.

US 2008159709 A1 is directed towards a program recording device, which temporally records all programs of all channels to ordinary recording areas. An associated mobile phone terminal includes a reception and recording function of television programs. When the user uses the mobile phone terminal to view or record a desired television program while on the road and goes back to home, the mobile phone terminal transmits program particularizing information (program title data) for particularizing a program viewed or recorded while on the road to the automatic program recording device in the home. The automatic program recording device receiving the program particularizing information moves the program corresponding to the program particularizing information from the ordinary recording areas to storage data areas, wherein the program is stored. That is US 2008159709 A1 is directed to assist a user to synchronize the information of his mobile unit with the program recording device at home.

### SUMMARY

According to the present invention, there is provided a recorder as set out in independent claim 1 and a recording method as set out in independent claim 7. Advantageous developments are defined in the dependent claims.

### BRIEF DESCRIPTION OF THE DRAWINGS

Fig. 1 is a block diagram showing a recorder according to an exemplary embodiment;
Fig. 2 is a diagram showing an example program table (past program table) output by the recorder and showing a content of each of plural full-recorded programs;
Fig. 3 is a diagram showing an example operation, related to the recorder according to the exemplary embodiment, of extracting a video signal of a desired program specified by the user from video signals of full-recorded programs, converting its format, and saving the video signal in units of a program;
Fig. 4 is a diagram showing an example operation, related to the recorder according to the exemplary embodiment t, of extracting a video signal of a reserved program from video signals of full-recorded programs, converting its format, and saving the video signal in units of a program;
Fig. 5 is a diagram showing an example operation, related to the recorder according to the exemplary embodiment, of saving a reserved program in units of a program at the same time as the program is recorded by full recording;
Fig. 6 is a flowchart showing a process, related to the recorder according to the exemplary embodiment, of playing back a desired program specified by the user among full-recorded programs and saving the program in units of a program in link with the playback;
Fig. 7 is a flowchart showing a process, related to the recorder according to the exemplary embodiment, of saving recording-reserved program among full-recorded programs; and
Fig. 8 is a conceptual diagram showing how full-recorded programs are erased overtime.

### DETAILED DESCRIPTION OF THE EMBODIMENTS

Embodiments of the present invention will be hereinafter described with reference to the drawings.

### <Example 1>

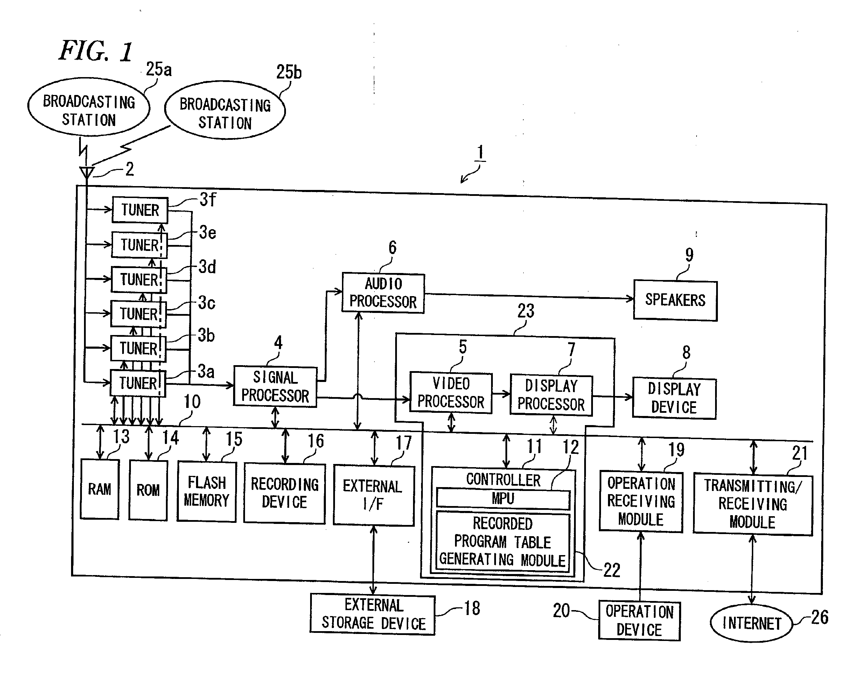

Fig. 1 is a block diagram showing a video display apparatus (recorder) 1 according to Example 1 of an exemplary embodiment. As shown in Fig. 1, the video display apparatus 1 is composed of tuners 3a-3f, a signal processor 4, a video processor 5, an audio processor 6, a display processor 7, a display device 8, speakers 9, a bus 10, a controller 11, a RAM 13, a ROM 14, a flash memory 15, a recording device 16, an external interface 17, an operation receiving unit 19, an operation device (remote controller) 20, and a transmitting/receiving module 21. The controller 11 incorporates an MPU 12 and a recorded program table generating module 22. Reference numeral 23 denotes a program table creating module. Reference numerals 18 and 26 denote an external storage device and the Internet, respectively. An antenna 2 is connected to the video display apparatus 1.

Plural broadcasting stations 25a, 25b, etc. broadcast plural broadcast programs. The plural programs (broadcast signals) that are broadcast from the plural broadcasting stations 25a, 25b, etc. in the form of broadcast waves are received by the antenna 2 and supplied to the tuners 3a-3f. The tuners 3a-3f tune in to broadcast signals of plural programs and output the selected signals to the signal processor 4.

The MPU 12 of the controller 11 is connected, via the bus 10, to and controls the tuners 3a-3f, the signal processor 4, the video processor 5, the audio processor 6, the display processor 7, the RAM 13, the ROM 14, the flash memory 15, the recording device 16, the external interface 17, the operation receiving unit 19, and the transmitting/receiving module 21.

The signal processor 4 decodes, simultaneously (in parallel), video signals of plural programs that have been selected by and output simultaneously (in parallel) from the tuners 3a-3f, and outputs resulting video signals having a transport stream (TS) format to the recording device 16.

The recording device 16 is a large-capacity recording device (video signal storage device) having a recording medium such as an HDD or an SSD and is incorporated in the video display apparatus 1.

The recording device 16 continuously receives the video signals having the transport stream format and records all received broadcast programs (full recording).

To view a desired broadcast program that was recorded by the recording device 16 by full recording, the user specifies the desired broadcast program in a past program table (described later). The video signal of the specified program is cut out (extracted) from full-recorded video signals and displayed on the display device 8 for viewing.

The past program table is generated by the recorded program table generating module 22.

A video signal that has been specified by the user and cut out (extracted) from full-recorded video signals is decoded by the signal processor 4, whereby an audio signal and a video signal are extracted and output to the audio processor 6 and the video processor 5, respectively.

The audio processor 6 decodes the received audio signal and outputs a resulting signal to the speakers 9. The speakers 9 receive the decoded audio signal and convert the audio signal into an output sound.

The video processor 5 decodes the received video signal and outputs a resulting signal to the display processor 7. The display processor 7 performs display processing relating to the color, display positions, etc. and outputs a resulting signal to the display device 8. The display device 8 receives the video signal as subjected to the display processing to a display unit such as a display panel (not shown).

A past program table generated by the recorded program table generating module 22 is displayed on the display device 8.

In the exemplary embodiment, the external storage device 18 having a recording medium such as an HDD or an SSD is connected to the video display apparatus 1 via the external interface 17 and can be used in the same manner as the recording device 16.

The operation device 20 such as a remote controller or a keyboard is connected to the video display apparatus 1 via the operation receiving unit 19 and allows the user to operate the video display apparatus 1.

Furthermore, the video display apparatus 1 is connected to the Internet 26 and hence can perform an Internet communication.

The tuners 3a-3f can be used for not only full recording but also personal video recorder (PVR) recording.

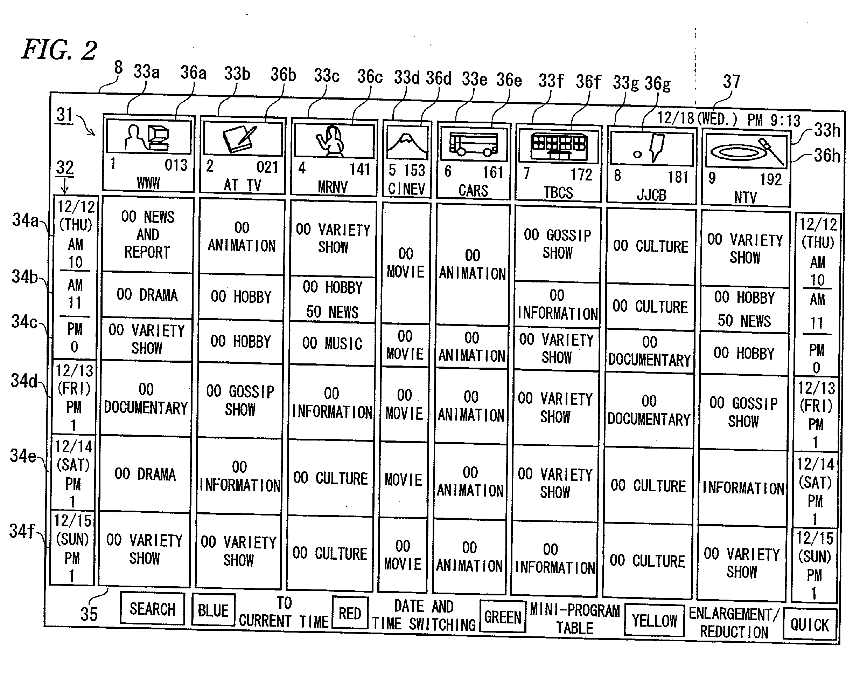

Fig. 2 is a diagram showing an example program table (past program table) 35 displayed in the video display apparatus 1 and showing a content of each of plural full-recorded programs.

As described above, full-recorded programs are programs that were broadcast in the past. Therefore, for discrimination from reserved programs, a table for display of a content of each of those programs is called a past program table.

As described above, the past program table 35 is displayed on the display device 8. A current date and time 37 indicates that the current date and time is December 18th (Wed.) PM: 9:13. A date and time column 32 includes entries 34a-34f which are 12/12 (Thu.) AM 9:00-10:00, 12/12 (Thu.) 10:00-11:00, 12/12 (Thu.) 11:00-12:00, 12/13 (Fri.) PM 0:00-1:00, 12/14 (Sat.) PM 0:00-1:00, 12/15 (Sun.) PM 0:00-1:00, respectively.

A channel column 33 includes channel entries 33a-33h which are channel WWW, channel At TV, channel MRNV, channel CineV, channel Ccns, channel Tbcs, channel JJCB, and channel NTV, respectively.

Moving images 36a-36h of full-recorded programs are displayed in the channel entries 33a-33h, that is, channel WWW, channel At TV, channel MRNV, channel Cine V, channel Ccns, channel Tbcs, channel JJCB, and channel NTV, respectively. For example, moving images of default programs (e.g., the top programs of the respective channels in the program table) are displayed.

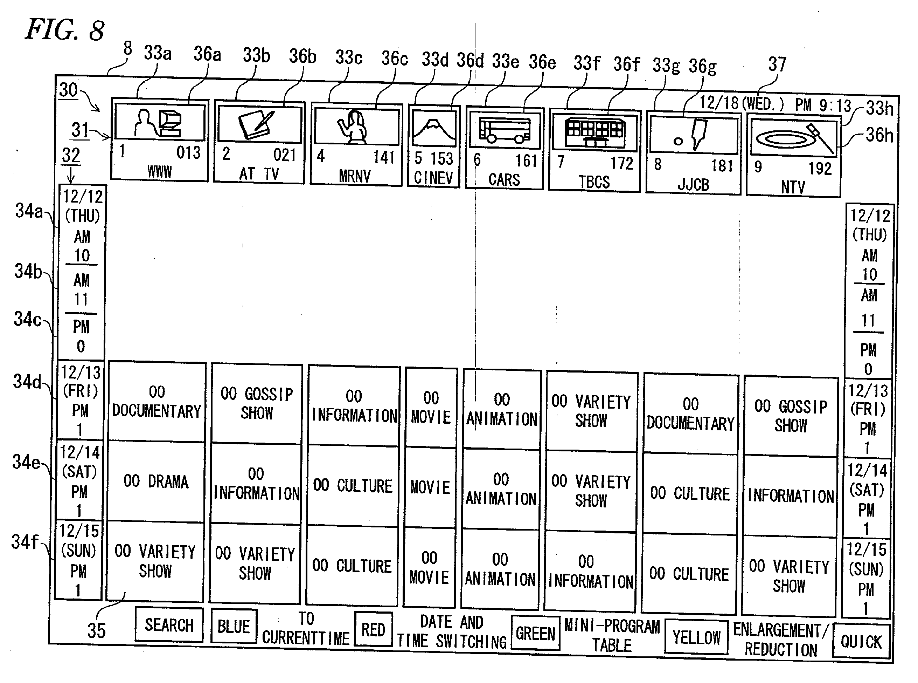

Fig. 8 is a conceptual diagram showing how full-recorded programs are erased overtime. Because of a limited capacity of the recording device 16 (storage device 18), even in the full recording function, it is necessary to, for example, record new programs while erasing old recorded video data. In the example of Fig. 8, the programs that were recorded during the time slots 34a-34c have been erased over time.

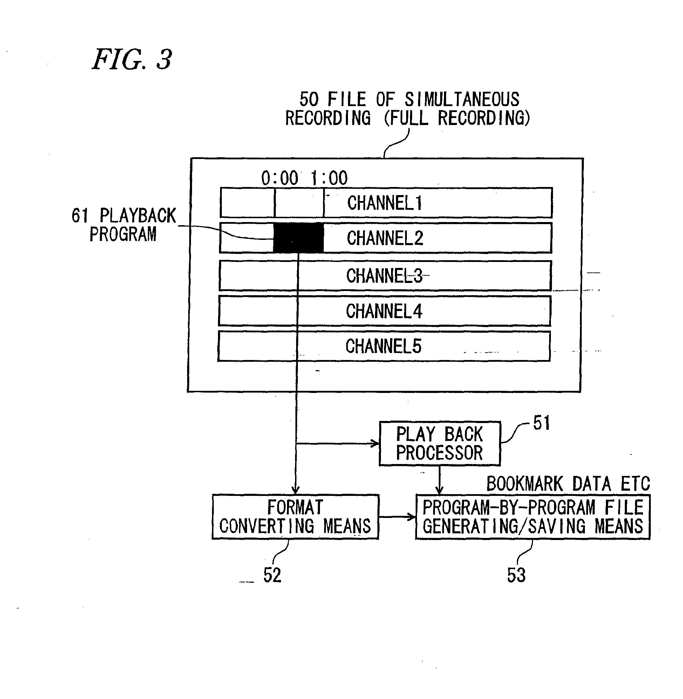

It is therefore desirable to save programs that the user wants to be kept recorded before they are erased. Fig. 3 is a diagram showing an example operation, performed by the video display apparatus 1 according to the exemplary embodiment, of extracting a video signal of a desired program specified by the user from video signals of full-recorded programs, converting its format, and saving it in units of a program.

Channel 1 to channel 5 are example channels of full-recorded programs. In this example operation, the user specifies the program of channel 2 that was recorded from 0:00 to 1:00 and the specified program is played back. Reference numeral 51 denotes a play back processor. The video signal (TS) of the desired program specified by the user is extracted, subjected to play back processing in the play back processor 51 of the video display apparatus 1, and thereby displayed. In the exemplary embodiment, a specified program need not always be played back in its entirety and at least part of it is played back.

Reference numerals 52 and 53 denote a format converting module and a program-by-program file generating/saving module, respectively. In this example operation, the desired program specified by the user is saved in link with its playback.

The format converting module 52 receives the thus-extracted video signal (TS) of the desired program, adds header information etc. to the video signal so that the video signal can be saved in units of a program, converts its format, and outputs a format-converted video signal.

The program-by-program file generating/saving module 53 receives the format-converted video signal, generates a file in units of a program, and saves the video signal in the recording device 16 or the external storage device 18.

With the above operation, a desired program that is extracted from full-recorded programs can be saved automatically in units of a program.

In the exemplary embodiment, in the apparatus in which a desired program is cut out from simultaneously recorded programs of plural channels and saved as a separate file, a desired program is played back simultaneously with its playback.

The prior art is associated with, for example, a problem that a file format for continuous recording is different from a file format for individual recording of a program among continuously recorded programs, as a result of which format conversion, code switching, etc. takes considerable time and the recorded program is erased during that course. By virtue of the above-described configuration, the exemplary embodiment is free of this problem.

More specifically, the exemplary embodiment can satisfy a desire to save a program selected from continuously recorded programs (full-recorded programs) while the selected program is played back on a trial basis and to view the program again later.

When programs of plural channel have been recorded continuously, the user can select a recorded program using a program table, a search function, or the like and cause the recorded program playback. The playback processing is performed in such a manner that the selected program is cut out from programs having the continuous recording format, decoded, and displayed. The selected program can be saved by converting its format and writing the program as a file in units of a program. It is also possible to set a bookmark or the like manually and cause the file to reflect the bookmark during the playback.

### <Example 2>

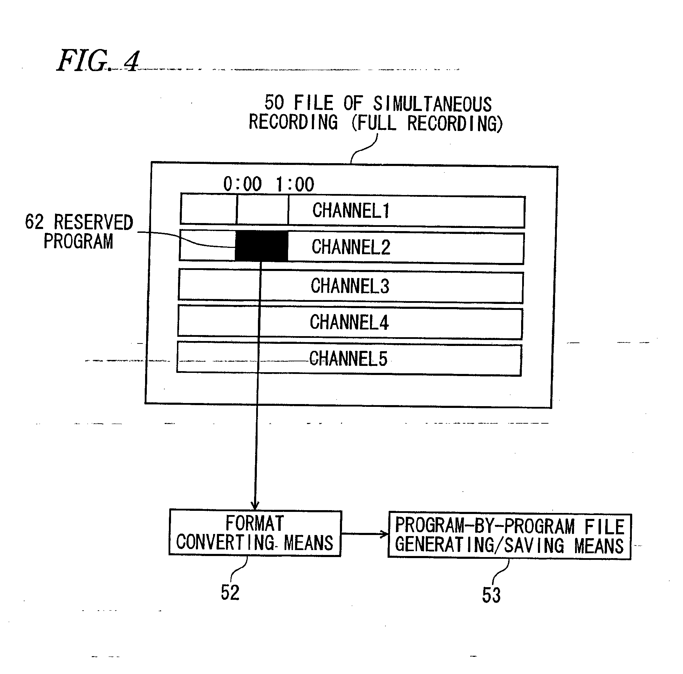

Fig. 4 shows an example operation, performed by a video display apparatus (recorder) 1 according to Example 2 of the exemplary embodiment, of extracting a video signal of a reserved program from video signals of full-recorded programs, converting its format, and saving the video signal in units of a program.

As in Example 1, reference numerals 52 and 53 denote a format converting module and a program-by-program file generating/saving module, respectively. Plural programs of channel 1 to channel 5 were to be recorded by full recording. It is assumed that the user made a recording reservation of a program of channel 2 to be broadcast from 0:00 to 1:00. The recording reservation may be PVR recording rather than full recording.

After plural programs have been recorded by full recording, a video signal (TS) of the desired program of the recording reservation is extracted.

The format converting module 52 receives the video signal (TS) of the desired program that is extracted by the reservation, adds header information etc. to the video signal so that the video signal can be saved in units of a program, converts its format, and outputs a format-converted video signal.

The program-by-program file generating/saving module 53 receives the format-converted video signal, generates a file in units of a program, and saves the file in the recording device 16 or the external storage device 18.

With the above operation, full-recorded programs, a desired program whose recording was reserved by the user can be saved automatically in units of a program.

In a case that a video display apparatus incorporates PVR tuners in addition to the full recording tuners, it is a common procedure to perform full recording and PVR recording independently of each other. In this case, there may occur an event that a reserved program is recorded simultaneously by full recording and PVR recording. For example, the same program may be recorded simultaneously, that is, doubly, by these two recording methods.

In such an event, each of the MPU 12, the RAM 13, and the ROM 14, for example, is used simultaneously for the two recording methods, heavy loads are imposed on them. Furthermore, full-recorded programs may be erased uselessly without being viewed. In contrast, the exemplary embodiment can prevent double recording of the same program and hence reduce the degree of useless recording.

There may occur a case that PVR reservation recording cannot accommodate a broadcast time slot change due to a reason on the broadcasting station side. In this case, the problem can be made less serious by saving a recording-reserved program among full-recorded programs.

Since saving of a program whose recording was reserved in advance is performed after it has been recorded, the time and labor to be taken by the user later can be reduced. Such a recording reservation can be made by specifying a program using a program table or through a date-and-time-specified recording reservation picture. A saved program can be displayed as an entry of a past program table or the like.

As described above, whereas full-recorded programs (continuously recorded programs) are deleted automatically when a prescribed time has elapsed, saved programs are not erased and hence can be kept displayed as entries of a past program table.

### <Example 3>

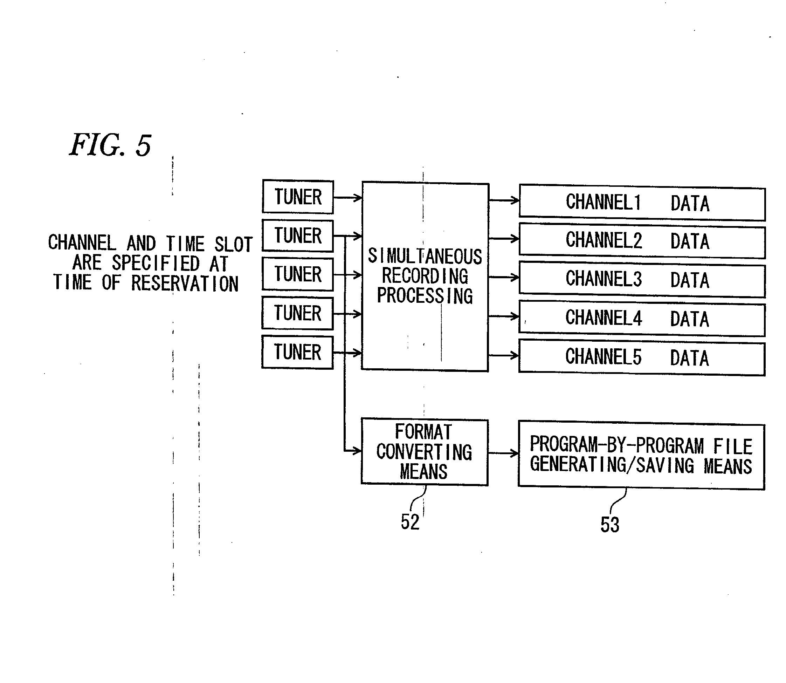

Fig. 5 is a diagram showing an example operation, performed by a video display apparatus (recorder) 1 according to Example 3 of the exemplary embodiment, of saving a reserved program in units of a program at the same time as it is recorded by full recording. For example, when such resources as the MPU 12 and the memories 13 and 14 are free, saving can be performed simultaneously with recording.

In this example operation, a channel and a time slot of a reservation program is specified in making a recording reservation. As in the example operations of Figs. 3 and 4, plural broadcast programs of channel 1 to channel 5 are recorded by full recording.

At the same time, a video signal (TS) of a desired program specified by the user is extracted and then received by a format converting module 52. The format converting module 52 adds header information etc. to the received video signal so that the video signal can be saved in units of a program, converts its format, and outputs a format-converted video signal.

A program-by-program file generating/saving module 53 receives the format-converted video signal, generates a file in units of a program, and saves the file in the recording device 16 or the external storage device 18.

With the above operation, when such resources as the MPU 12 and the memories 13 and 14 are free, saving can be performed simultaneously with recording.

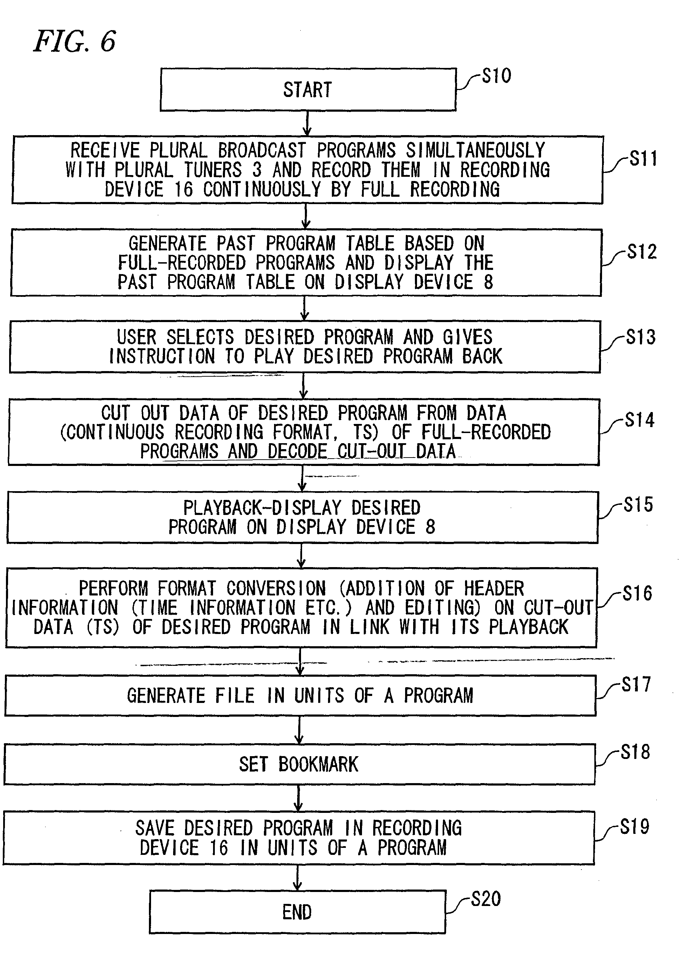

Fig. 6 is a flowchart of a process, executed by the video display apparatus 1 according to the exemplary embodiment, of playing back a desired program specified by the user among full-recorded programs and saving it in units of a program in link with the playback.

The process is started at step S10. At step S11, plural broadcast programs are received simultaneously by the tuners 3 and recorded continuously in the recording device 16 by full recording.

At step S12, a past program table is generated based on full-recorded programs and display on the display device 8. At step S 13, the user selects a desired program and gives an instruction to play back the selected program. At step S14, data of the desired program is cut out from data (continuous recording format, TS) of the full-recorded programs and decoded.

At step S15, the selected desired program is playback-displayed on the display device 8. At step S16, the cut-out data (TS) of the desired program is subjected to format conversion (addition of header information (time information etc.) and editing) in link with its playback.

At step S 17, a file is generated in units of a program. At step S 18, a bookmark is set. At step S19, the desired program is saved in the recording device 16 in units of a program. At step S20, the process is finished.

According to the above-described process, a desired program extracted from full-recorded programs can be saved automatically in units of a program.

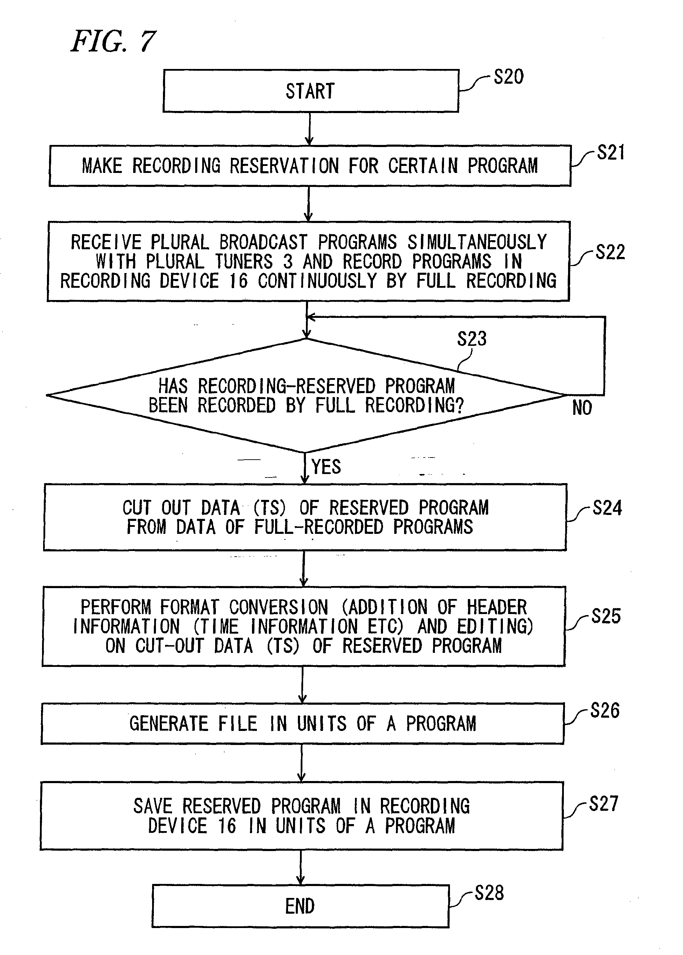

Fig. 7 is a flowchart of a process, executed by the video display apparatus 1 according to the exemplary embodiment, of saving recording-reserved program among full-recorded programs.

The process is started at step S20. At step S21, a recording reservation for a desired program is made. At step S22, plural broadcast programs are received simultaneously by the tuners 3 and recorded continuously in the recording device 16 by full recording.

At step S23, it is determined whether or not the recording-reserved program has been recorded by full recording. If it is determined that the recording-reserved program has been recorded by full recording (Yes at step S23), the process moves to step S24. On the other hand, if it is determined that the recording-reserved program has not been recorded by full recording yet (No at step S23), the process returns to step 523.

At step S24, data (TS) of the reserved program is cut out from data of full-recorded programs. At step S25, the cut-out data (TS) of the reserved program is subjected to format conversion (addition of header information (time information etc.) and editing).

At step S26, a file is generated in units of a program. At step S27, the desired program is saved in the recording device 16 in units of a program. At step S28, the process is finished.

According to the above-described process, a desired program whose recording was reserved by the user can be saved automatically in units of a program among full-recorded programs.

According to the above-described embodiments, as for the processing for saving, for long-term storage, part of programs that have been recorded simultaneously (full recording) using plural tuners, such programs can be saved in units of a program without requiring the user to make an additional operation or taking extra time.

According to the above-described embodiments, it is possible to solve the problem that a desired program that were recorded by the full recording function are erased when a prescribed time has elapsed.

## Claims

1. A recorder comprising:
a first video recording module (4) configured to receive video signals of a plurality of broadcast programs simultaneously and to record the received video signals continuously in a recording medium (16, 18) according to a first format, said first format being a transport stream format and said plurality of recorded broadcast programs being automatically deleted when a prescribed time has elapsed;
a program playback module (51) configured to extract from said plurality of recorded broadcast programs a program specified by a user to playback from the plurality of broadcast programs and to playback at least a part of the extracted program; and
a second video recording module (52) configured to convert, a video signal of the extracted program upon being played back by the program playback module into a video signal having a second format and to record the converted video signal in that recording medium while the extracted program is played back on a trial basis to distinguish the extracted program from the plurality of the recorded broadcast programs in the first format to protect the extracted program from being automatically deleted of the recorded broadcast programs, wherein a file of the video signal of the program recorded according to the second format is generated in units of a program.

2. The recorder of claim 1, wherein the second video recording module (52) is configured to add header information to the converted video signal having the second format.

3. The recorder of claims 1 or 2, further comprising:
a program table output module (23) configured to generate and output a program table indicating a content of each of the plurality of broadcast programs.

4. The recorder of claims 1, wherein a bookmark is set for the program recorded according to the second format.

5. The recorder of claims 1, further comprising a recording reservation setting module configured to set a recording reservation for a certain program,
wherein the second video recording module (52) configured to convert a video signal of the recording-reserved program from the plurality of broadcast programs into a video signal having a second format, and to record the converted video signal in the recording medium (16, 18).

6. The recorder of claim 5, further comprising a detector configured to detect whether or not the recording-reserved program is recorded in the recording medium (16, 18),
wherein the second recording module (52) configured to convert the video signal of the recording-reserved program into the video signal having the second format when the detector detects recording-reserved program is recorded in the recording medium, and to record the converted video signal in the recording medium.

7. A recording method comprising:
receiving video signals of a plurality of broadcast programs simultaneously and recording the received video signals continuously in a recording medium (16, 18) according to a first format, said first format being a transport stream format and said plurality of recorded broadcast programs being automatically deleted when a prescribed time has elapsed;
extracting from said plurality of recorded broadcast programs a program specified by a user to playback from the plurality of broadcast programs and playingback at least a part of the extracted program; and
upon being played back, converting a video signal of the extracted and played back program into a video signal having second format and recording the video signal in that recording medium while the extracted program is played back on a trial basis to distinguish the extracted program from the plurality of the recorded broadcast programs in the first format to protect the extracted program from being automatically deleted of the recorded broadcast programs, wherein a file of the video signal of the program recorded according to the second format is generated in units of a program.

8. The recording method of claim 7 further comprising:
setting a recording reservation for a certain program; and
extracting a video signal of the recording-reserved program from the plurality of broadcast programs, converting the video signal of the extracted program into a video signal having a second format, and recording the converted video signal in the recording medium.

9. A video display apparatus comprising:
the recorder according to any one of claims 1 to 6; and
a display device (8) configured to display a video of the played program.

## Patentansprüche

1. Rekorder, aufweisend:
ein erstes Videoaufzeichnungsmodul (4), das konfiguriert ist, um Videosignale einer Vielzahl von Rundfunkprogrammen gleichzeitig zu empfangen, und um die empfangenen Videosignale in einem Aufzeichnungsmedium (16, 18) gemäß einem ersten Format kontinuierlich aufzuzeichnen, wobei das erste Format ein Transportstromformat ist und die Vielzahl von aufgezeichneten Rundfunkprogrammen automatisch gelöscht wird, wenn eine vorgeschriebene Zeit abgelaufen ist;
ein Programmwiedergabemodul (51), das konfiguriert ist, um aus der Vielzahl von aufgezeichneten Rundfunkprogrammen ein Programm zu extrahieren, das durch einen Nutzer spezifiziert ist, um aus der Vielzahl von Rundfunkprogrammen wiedergegeben zu werden, und um zumindest einen Teil des extrahierten Programms wiederzugeben; und
ein zweites Videoaufzeichnungsmodul (52), das konfiguriert ist, um ein Videosignal des extrahierten Programms auf eine Wiedergabe durch das Programmwiedergabemodul hin in ein Videosignal mit einem zweiten Format umzuwandeln, und um das umgewandelte Videosignal in diesem Aufzeichnungsmedium aufzuzeichnen, während das extrahierte Programm probeweise wiedergegeben wird, um das extrahierte Programm von der Vielzahl der aufgezeichneten Rundfunkprogramme in dem ersten Format zu unterscheiden, um das extrahierte Programm davor zu schützen, dass es aus den aufgezeichneten Rundfunkprogrammen automatisch gelöscht wird, wobei eine Datei des Videosignals des gemäß dem zweiten Format aufgezeichneten Programms in Einheiten eines Programms erzeugt wird.

2. Rekorder nach Anspruch 1, wobei das zweite Videoaufzeichnungsmodul (52) konfiguriert ist, um Kopfinformationen zu dem umgewandelten Videosignal mit dem zweiten Format hinzuzufügen.

3. Rekorder nach Anspruch 1 oder 2, ferner mit:
einem Programmtabellenausgabemodul (23), das konfiguriert ist, um eine Programmtabelle zu erzeugen und auszugeben, die einen Inhalt von jedem der Vielzahl von Rundfunkprogrammen anzeigt.

4. Rekorder nach Anspruch 1, wobei ein Lesezeichen für das gemäß dem zweiten Format aufgezeichnete Programm gesetzt ist.

5. Rekorder nach Anspruch 1, ferner mit einem Aufzeichnungsreservierungseinstellmodul, das konfiguriert ist, um eine Aufzeichnungsreservierung für ein bestimmtes Programm einzustellen,
wobei das zweite Videoaufzeichnungsmodul (52) konfiguriert ist, um ein Videosignal des aus der Vielzahl von Rundfunkprogrammen aufzeichnungsreservierten Programms in ein Videosignal mit einem zweiten Format umzuwandeln, und um das umgewandelte Videosignal in dem Aufzeichnungsmedium (16, 18) aufzuzeichnen.

6. Rekorder nach Anspruch 5, ferner mit einem Detektor, der konfiguriert ist, um zu erfassen, ob das aufzeichnungsreservierte Programm in dem Aufzeichnungsmedium (16, 18) aufgezeichnet ist oder nicht,
wobei das zweite Aufzeichnungsmodul (52) konfiguriert ist, um das Videosignal des aufzeichnungsreservierten Programms in das Videosignal mit dem zweiten Format umzuwandeln, wenn der Detektor erfasst, dass das aufzeichnungsreservierte Programm in dem Aufzeichnungsmedium aufgezeichnet ist, und um das umgewandelte Videosignal in dem Aufzeichnungsmedium aufzuzeichnen.

7. Aufzeichnungsverfahren, aufweisend:
gleichzeitiges Empfangen von Videosignalen einer Vielzahl von Rundfunkprogrammen und kontinuierliches Aufzeichnen der empfangenen Videosignale in einem Aufzeichnungsmedium (16, 18) gemäß einem ersten Format, wobei das erste Format ein Transportstromformat ist und die Vielzahl von aufgezeichneten Rundfunkprogrammen automatisch gelöscht wird, wenn eine vorgeschriebene Zeit abgelaufen ist;
Extrahieren eines Programms aus der Vielzahl von aufgezeichneten Rundfunkprogrammen, das durch einen Nutzer spezifiziert ist, um aus der Vielzahl von Rundfunkprogrammen wiedergegeben zu werden, und Wiedergeben von zumindest einem Teil des extrahierten Programms; und
auf eine Wiedergabe hin, Umwandeln eines Videosignals des extrahierten und wiedergegebenen Programms in ein Videosignal mit einem zweiten Format, und Aufzeichnen des Videosignals in diesem Aufzeichnungsmedium während das extrahierte Programm probeweise wiedergegeben wird, um das extrahierte Programm von der Vielzahl der in dem ersten Format aufgezeichneten Rundfunkprogramme zu unterscheiden, um das extrahierte Programm von einem automatischen Löschen der aufgezeichneten Rundfunkprogramme zu schützen, wobei eine Datei des Videosignals des gemäß dem zweiten Format aufgezeichneten Programms in Einheiten eines Programms erzeugt wird.

8. Aufzeichnungsverfahren nach Anspruch 7, ferner aufweisend:
Einstellen einer Aufzeichnungsreservierung für ein bestimmtes Programm; und
Extrahieren eines Videosignals des aufzeichnungsreservierten Programms aus der Vielzahl von Rundfunkprogrammen, Umwandeln des Videosignals des extrahierten Programms in ein Videosignal mit einem zweiten Format, und Aufzeichnen des umgewandelten Videosignals in dem Aufzeichnungsmedium.

9. Videoanzeigevorrichtung, aufweisend:
den Rekorder nach einem der Ansprüche 1 bis 6; und
eine Anzeigevorrichtung (8), die konfiguriert ist, um ein Video des gespielten Programms anzuzeigen.

## Revendications

1. Enregistreur comprenant :
un premier module d'enregistrement vidéo (4) configuré pour recevoir des signaux vidéo simultanément d'une pluralité de programmes de diffusion et pour enregistrer sur un support d'enregistrement (16, 18) les signaux vidéo reçus en continu conformément à un premier format, ledit premier format étant un format de flux de transport et ladite pluralité de programmes de diffusion enregistrés étant automatiquement supprimés lorsqu'un temps prédéterminé s'est écoulé ;
un module de lecture de programme (51) configuré pour extraire de ladite pluralité de programmes de diffusion enregistrés un programme qu'un utilisateur spécifie à lire parmi la pluralité de programmes de diffusion et pour lire au moins une partie du programme extrait ; et
un second module d'enregistrement vidéo (52) configuré pour convertir un signal vidéo du programme extrait pendant qu'il est lu par le module de lecture de programme, en un signal vidéo ayant un second format et pour enregistrer le signal vidéo converti sur ce support d'enregistrement pendant que le programme extrait est lu à titre expérimental pour distinguer le programme extrait de la pluralité de programmes de diffusion enregistrés dans le premier format pour empêcher le programme extrait d'être automatiquement supprimé des programmes de diffusion enregistrés, dans lequel un fichier du signal vidéo du programme enregistré selon le second format est généré en unités d'un programme.

2. Enregistreur selon la revendication 1, dans lequel le second module d'enregistrement vidéo (52) est configuré pour ajouter des informations d'en-tête au signal vidéo converti ayant le second format.

3. Enregistreur selon la revendication 1 ou 2, comprenant en outre :
un module de sortie de table de programmes (23) configuré pour générer et fournir en sortie une table de programmes indiquant le contenu de chaque programme de la pluralité de programmes de diffusion.

4. Enregistreur selon la revendication 1, dans lequel un signet est fixé pour le programme enregistré selon le second format.

5. Enregistreur selon la revendication 1, comprenant en outre un module de détermination de réservation d'enregistrement configuré pour déterminer une réservation d'enregistrement pour un certain programme,
dans lequel le second module d'enregistrement vidéo (52) est configuré pour convertir un signal vidéo du programme réservé à un enregistrement de la pluralité de programmes de diffusion en un signal vidéo ayant un second format, et pour enregistrer sur le support d'enregistrement (16, 18)le signal vidéo converti.

6. Enregistreur selon la revendication 5, comprenant en outre un détecteur configuré pour détecter si le programme réservé à un enregistrement est ou non enregistré sur le support d'enregistrement (16, 18),
dans lequel le second module d'enregistrement (52) est configuré pour convertir le signal vidéo du programme réservé à un enregistrement en signal vidéo ayant le second format lorsque le détecteur détecte que le programme réservé à un enregistrement est enregistré sur le support d'enregistrement, et pour enregistrer sur le support d'enregistrement le signal vidéo converti.

7. Procédé d'enregistrement comprenant :
la réception de signaux vidéo simultanément d'une pluralité de programmes de diffusion et l'enregistrement sur un support d'enregistrement (16, 18) des signaux vidéo reçus en continu conformément à un premier format, ledit premier format étant un format de flux de transport et ladite pluralité de programmes de diffusion enregistrés étant automatiquement supprimés lorsqu'un temps prédéterminé s'est écoulé ;
l'extraction de ladite pluralité de programmes de diffusion enregistrés d'un programme qu'un utilisateur spécifie à lire parmi la pluralité de programmes de diffusion et la lecture d'au moins une partie du programme extrait ; et
pendant qu'il est lu, la conversion d'un signal vidéo du programme extrait et lu en un signal vidéo ayant un second format et l'enregistrement du signal vidéo sur ce support d'enregistrement pendant que le programme extrait est lu à titre expérimental pour distinguer le programme extrait de la pluralité de programmes de diffusion enregistrés dans le premier format pour empêcher le programme extrait d'être automatiquement supprimé des programmes de diffusion enregistrés, dans lequel un fichier du signal vidéo du programme enregistré selon le second format est généré en unités d'un programme.

8. Procédé d'enregistrement selon la revendication 7, comprenant en outre :
la détermination d'une réservation d'enregistrement pour un certain programme ; et
l'extraction d'un signal vidéo du programme réservé à un enregistrement de la pluralité de programmes de diffusion, la conversion du signal vidéo du programme extrait en un signal vidéo ayant un second format, et l'enregistrement sur le support d'enregistrement du signal vidéo converti.

9. Dispositif d'affichage vidéo comprenant :
L'enregistreur selon l'une quelconque des revendications 1 à 6 ; et
un dispositif d'affichage (8) configuré pour afficher une vidéo du programme lu.
